# EUROPÄISCHE PATENTANMELDUNG

(11) **EP 1 039 188 A2**
(43) Veröffentlichungstag der Anmeldung: **27.09.2000**
(21) Anmeldenummer: 00103194.7
(22) Anmeldetag: 17.02.2000
(51) Int. Cl.: F16K 5/06

(54) **Kugelhahn**

(30) Priorität: 24.03.1999 DE 29905371 U
(71) Anmelder: ASV Stübbe GmbH & Co. KG, D-32602 Vlotho (DE)
(72) Erfinder: Pohlmeier, Gerhard, 32657 Lemgo (DE)
(74) Vertreter: Hosbach, Hans Ulrich, Dipl.-Ing.

(57) **Zusammenfassung**

Offenbart wird ein Kugelhahn mit einem Gehäuse (1), das einen Einlaß- und einen Auslaßkanal (2,3) bildet. Das Gehäuse (1) enthält zwei Dichtringe (4), von denen der eine dem Einlaßkanal (2) und der andere dem Auslaßkanal (3) zugeordnet ist. Ferner enthält das Gehäuse (1) eine Schaltkugel (5), die eine an beiden Dichtringen (4) anliegende Oberfläche aufweist und zwischen einer Schließstellung und einer Öffnungsstellung verdrehbar ist. In der Schließstellung umgrenzen die Dichtringe (4) je einen Abdichtbereich (11) auf der Oberfläche der Schaltkugel (5). Letztere weist eine Durchgangsöffnung (7) auf, die in der Öffnungsstellung zusammen mit dem Einlaß- und dem Auslaßkanal (2,3) einen Durchlaßkanal definiert. Ferner ist die Schaltkugel (5) mit mindestens einem einlaßseitigen und mindestens einem auslaßseitigen Spülkanal (14) versehen. Die Spülkanäle (14) gehen aus vom Durchlaßkanal und führen zu Bereichen außerhalb der Abdichtbereiche (11) auf der Oberfläche der Schaltkugel (5). In der Öffnungsstellung der Schaltkugel (5) wird also der Gehäuseinnenraum durchspült.

## Beschreibung

Die Erfindung betrifft einen Kugelhahn mit
- einem Gehäuse, das einen Einlaß- und einen Auslaßkanal bildet,
- zwei Dichtringen, von denen der eine dem Einlaßkanal und der andere dem Auslaßkanal zugeordnet ist, und
- einer an beiden Dichtringen anliegenden, verdrehbaren Schaltkugel mit einer Durchgangsöffnung, die in der Öffnungssteilung der Schaltkugel zusammen mit dem Einlaß- und dem Auslaßkanal einen Durchlaßkanal definiert, wobei die Dichtringe in der Schließstellung der Schaltkugel je einen Abdichtbereich auf der Oberfläche der Schaltkugel umgrenzen.

Derartige Kugelhähne haben sich in der Praxis bewährt, sind allerdings bisher für Frisch- bzw. Trinkwasserleitungen nicht geeignet, da ihre Toträume bei geöffneter Armatur nicht durchströmt werden. Nimmt die Schaltkugel ihre Öffnungsstellung ein, so liegen die Dichtringe rings um die Durchgangsöffnung an der Oberfläche der Schaltkugel an und dichten den zentralen Innenraum des Gehäuses ab, der sich ringförmig um die Schaltkugel herumerstreckt. Erst während des Schließvorganges wird dieser Raum kurzzeitig durchströmt.

Bei geöffneter Armatur bildet sich also ein Totraum, in welchem das eingeschlossene Wasser stagniert. Dies ist auf dem Gebiet des Frisch- bzw. Trinkwassers unzulässig. Die zugehörigen Armaturen verbleiben teilweise bis zu 10 Jahren geöffnet im Wasserleitungsnetz. Stagnierendes Wasser birgt also die Gefahr, daß sich Keime bilden, die dann beim Schließen der Armatur in den Hauptstrom der Trinkwasserleitung eingespült werden können, was ohne Frage nicht toleriert werden kann.

Der Erfindung liegt die Aufgabe zugrunde, einen Kugelhahn der eingangs genannten Art zu schaffen, der sich für den Einsatz in Frisch- bzw. Trinkwasserleitungen eignet.

Zur Lösung dieser Aufgabe ist der eingangs genannte Kugelhahn erfindungsgemäß dadurch gekennzeichnet, daß die Schaltkugel mit mindestens einem einlaßseitigen und mindestens einem auslaßseitigen Spülkanal versehen ist, wobei die Spülkanäle, ausgehend vom Durchlaßkanal, zu Bereichen außerhalb mindestens eines der Abdichtbereiche auf der Oberfläche der Schaltkugel führen.

Befindet sich die Schaltkugel in der Öffnungsstellung, so ist der zentrale Gehäusebereich zwischen den Dichtringen sowohl einlaßseitig als auch auslaßseitig an den Durchlaßkanal angeschlossen. Dieser Gehäusebereich wird also wirksam gespült und stellt daher keinen Totraum mit stagnierendem Wasser dar. Nimmt die Schaltkugel ihre Schließstellung ein, so ist mindestens einer der Abdichtbereiche frei von Spülkanalmündungen, wodurch die Dichtfunktion der Armatur sichergestellt ist. Dieser Abdichtbereich befindet sich bevorzugt auf der Auslaßseite der Armatur, so daß der dortige Dichtring unter dem Anpreßdruck des Mediums steht.

In aller Regel wird man allerdings den Kugelhahn so gestalten, daß keine definierte Einbaulage vorgegeben ist. Beide Seiten können also sowohl als Einlaßseite als auch als Auslaßseite arbeiten. Dabei bietet sich dann eine symmetrische Gestaltung an, bei der beide Abdichtbereiche auf der Oberfläche der Schaltkugel frei von Spülkanalmündungen sind.

Ganz besonders vorteilhaft ist es, sowohl im oberen als auch im unteren Bereich der Schaltkugel Spülkanäle vorzusehen. Die Spülkanäle werden nach Anzahl und Strömungsquerschnitt an die jeweiligen Gegebenheiten angepaßt, nämlich an die Nennweite der Armatur und an die vorherrschenden Strömungsgeschwindigkeiten. Überraschenderweise wurde gefunden, daß eine ausreichende Spülung des Gehäuseinnenraums auch bei auslaufendem Wasser, also bei sehr geringen Strömungsgeschwindigkeiten möglich ist.

Eine fertigungstechnisch ganz besonders günstige Konstruktion ergibt sich dadurch, daß die Spülkanäle als Rinnen in der Oberfläche der Schaltkugel ausgebildet sind. In der Öffnungsstellung der Schaltkugel unterqueren diese Rinnen die jeweils zugehörigen Dichtringe und schließen auf diese Weise die axialen Endbereiche des Gehäuseinnenraums an den Durchlaßkanal an. Die Spülung erstreckt sich also intensiv über den gesamten Gehäuseinnenraum. Eine Anpassung der Strömungsquerschnitte an die jeweilige Baugröße und Strömungsgeschwindigkeit ist problemlos durch eine entsprechende Wahl der Breite und Tiefe der Rinnen möglich.

Dabei besteht ein besonders vorteilhaftes Merkmal darin, daß die Spülkanal-Rinnen in der Öffnungsstellung der Schaltkugel mit zugehörigen Nuten fluchten, die an den gehäuseinnenseitigen Enden der Einlaß- und Auslaßkanäle ausgebildet sind. Dadurch ergibt sich ein günstiges Strömungsverhalten in den Bereichen zwischen den Rinnen und dem Durchlaßkanal. Die Nuten können schräg auf die Rinnen zulaufen. Sie können allerdings auch radial ausgerichtet sein.

Alternativ zu den Nuten oder als zusätzliches Merkmal wird in Weiterbildung der Erfindung vorgeschlagen, daß die Einlaß- und Auslaßkanäle je mindestens an ihrem gehäuseinnenseitigen Ende einen Querschnitt aufweisen, der größer ist als der Querschnitt der Durchgangsöffnung der Schaltkugel. Dabei kann es sich um eine konische Querschnittserweiterung handeln oder aber auch um einen Querschnitt, der in entsprechendem Abstand vom gehäuseinnenseitigen Ende sprunghaft vergrößert ist. In jedem Fall bewirkt die im Querschnitt kleinere Durchgangsöffnung der Schaltkugel eine Störung der Strömung mit entsprechender Druckdifferenz zwischen der Einlaß- und der Auslaßseite, wodurch die Spülung des Gehäuseinnenraums gefördert wird.

Ein besonders vorteilhaftes Merkmal besteht darin, daß das gehäuseinnenseitige Ende der Einlaß- und Auslaßkanäle von einem Stützring für den zugehörigen Dichtring gebildet wird. Dieser Stützring, der eine Halterung für den Dichtring bildet, wird ohnehin als gesondertes Bauteil gefertigt und kann dabei mit minimalem Aufwand mit Nuten und/oder Querschnittserweiterungen für den Anschluß der Spülkanal-Rinnen der Schaltkugel versehen werden.

Sehr günstige Ergebnisse lassen sich auch mit einer Konstruktion erzielen, bei der die Spülkanal-Rinnen mindestens mit einem Teil ihres Querschnitts in der Durchgangsöffnung der Schaltkugel münden. Dieses Merkmal läßt sich bevorzugt mit dem Merkmal der Nuten an den gehäuseinnenseitigen Enden der Einlaß- und Auslaßkanäle kombinieren sowie auch mit dem Merkmal der Querschnittsvergrößerung der Einlaß- und Auslaßkanäle.

Als wesentliche Alternative wird in Weiterbildung der Erfindung vorgeschlagen, die Spülkanäle als Bohrungen auszubilden, die von der Durchgangsöffnung der Schaltkugel zu deren Oberfläche führen. Die Mündungen der Spülkanal-Bohrungen können derart auf der Oberfläche der Schaltkugel verteilt werden, daß sie bei deren Betätigung nicht mit den Dichtringen in Berührung treten, so daß letztere geschont werden. Der Spüleffekt stellt sich ebenso ein und ist gleichermaßen steuerbar wie im Falle der Spülkanal-Rinnen.

Zur Steigerung des Spüleffektes wird vorgeschlagen, daß die Durchgangsöffnung der Schaltkugel zwischen den einlaß- und auslaßseitigen Spülkanal-Bohrungen eine Querschnittsverengung aufweist. Daraus resultiert ein Düseneffekt mit entsprechendem Druckunterschied zwischen der Einlaßseite und der Auslaßseite. Strömungstechnisch günstig ist es, die Querschnittsverengung durch stetige Querschnittsänderung zu erzeugen, wobei der engste Querschnitt im Zentrum der Schaltkugel liegt. Nahe dem engsten Querschnitt liegen die innenseitigen Mündungen der Spülkanalbohrungen, wobei es besonders vorteilhaft ist, diese von hier aus in Richtung auf den Einlaß- bzw. Auslaßkanal geneigt verlaufen zu lassen. Die außenseitigen Mündungen der Bohrungen liegen dann in den axialen Randbereichen des Gehäuseinnenraums, wodurch, wie oben erläutert, der Spülvorgang gefördert wird.

Die Erfindung wird im folgenden anhand von bevorzugten Ausführungsbeispielen im Zusammenhang mit der beiliegenden Zeichnung näher erläutert. Die Zeichnung zeigt in:
Figur 1 einen Axialschnitt durch einen Kugelhahn nach einer ersten Ausführungsform;
Figur 2 in entsprechender Darstellung eine zweite Ausführungsform;
Figur 3 in entsprechender Darstellung eine dritte Ausführungsform.

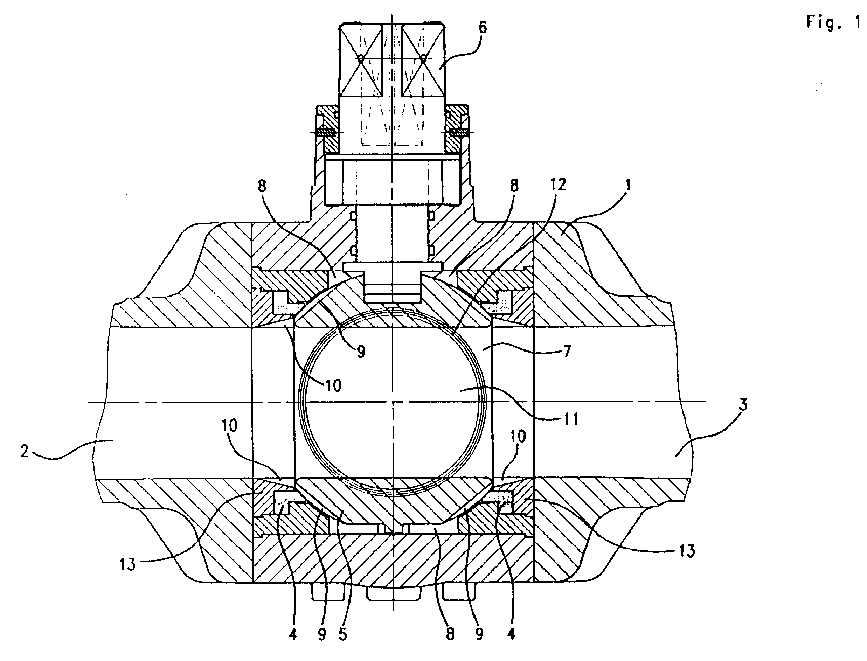

Der Kugelhahn nach Figur 1 weist ein Gehäuse 1 auf, welches einen Einlaßkanal 2 und einen Auslaßkanal 3 bildet. Je nach Einbaulage kann die Strömungsrichtung umgekehrt sein, so daß also der Kanal 2 den Auslaßkanal und der Kanal 3 den Einlaßkanal bildet. Der Einfachheit halber wird in der folgenden Beschreibung die anfänglich angegebene Strömungsrichtung vorausgesetzt.

Das Gehäuse enthält zwei Dichtringe 4, von denen der eine dem Einlaßkanal 2 und der andere dem Auslaßkanal 3 zugeordnet ist. Ferner enthält das Gehäuse eine Schaltkugel 5, die an den beiden Dichtringen 4 anliegt und von einer Betätigungseinrichtung 6 um ihre zugehörige Achse gedreht werden kann.

Die Schaltkugel 5 ist ferner mit einer Durchgangsöffnung 7 versehen, die in der Öffnungsstellung der Armatur - wie in der Zeichnung dargestellt - eine Verbindung zwischen dem Einlaßkanal 2 und dem Auslaßkanal 3 bildet und mit diesen einen Durchflußkanal definiert.

Dieser Durchflußkanal steht über Spülkanäle mit einem zwischen den Dichtringen 4 gebildeten Gehäuseinnenraum 8 in Verbindung. Diese Spülkanäle werden gebildet von Rinnen 9, die in die Oberfläche der Schaltkugel 5 eingearbeitet sind, sowie von Nuten 10, die an den gehäuseinnenseitigen Enden des Einlaßkanals 2 und des Auslaßkanals 3 ausgebildet sind. Die Nuten 10 fluchten in der Schließstellung der Schaltkugel 5 mit den Rinnen 9.

Die Rinnen 9 in Verbindung mit den Nuten 10 bewirken eine intensive Spülung des Gehäuseinnenraums 8, wenn die Schaltkugel 5 ihre Öffnungsstellung einnimmt. Eine Keimbildung durch stagnierendes Wasser wird also verhindert. Die Rinnen 9 münden in den axial außen liegenden Bereichen des Gehäuseinnenraums 8 und verhindern auf diese Weise das Auftreten nicht ausreichend gespülter Randzonen.

Im übrigen ist die Anordnung so getroffen, daß die Rinnen 9 außerhalb von Abdichtbereichen 11 der Oberfläche der Schaltkugel 5 liegen. Diese Abdichtbereiche 11 werden von den Dichtringen 4 umgrenzt, sobald die Schaltkugel 5 ihre Schließstellung einnimmt. In Figur 1 ist dies durch Einzeichnung einer Dichtfläche 12 angedeutet.

Aus herstellungstechnischen Gründen sind die Nuten 10 je in einem Stützring 13 für den zugehörigen Dichtring 4 eingearbeitet, da die Stützringe 13 ohnehin als gesonderte Einzelteile hergestellt werden.

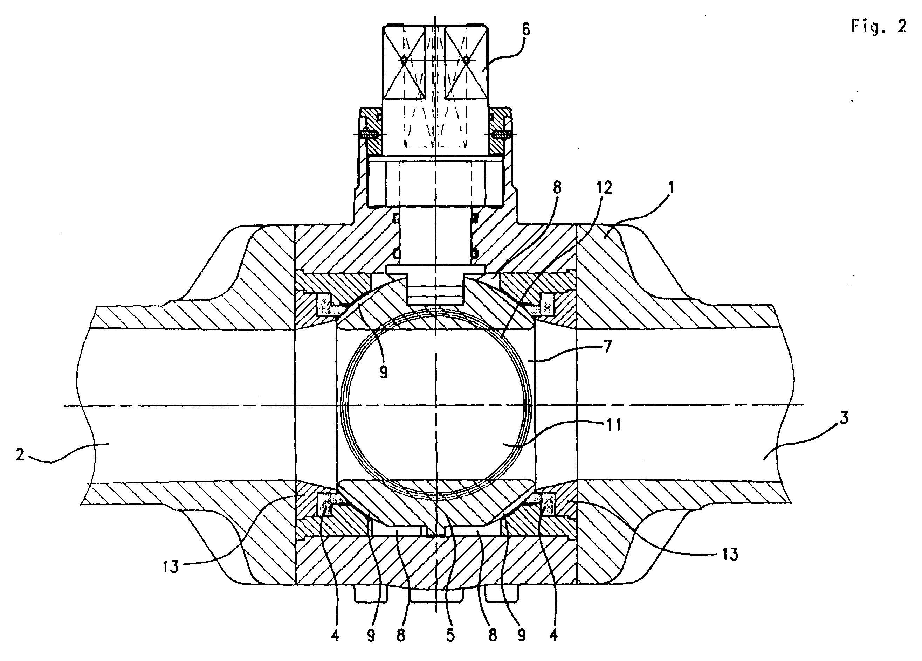

Die Ausführungsform nach Figur 2 unterscheidet sich von der nach Figur 1 dadurch, daß die Stützringe 13 nicht mit Nuten versehen sind, sondern mit einer konischen Querschnittserweiterung, die die Randströmung einlaßseitig im Bereich der Rinnen 9 gegen die Schaltkugel 5 prallen läßt, wodurch sich zwischen dem Einlaß und dem Auslaß ein Druckunterschied ergibt, der die Spülung des Gehäuseinnenraums 8 verstärkt.

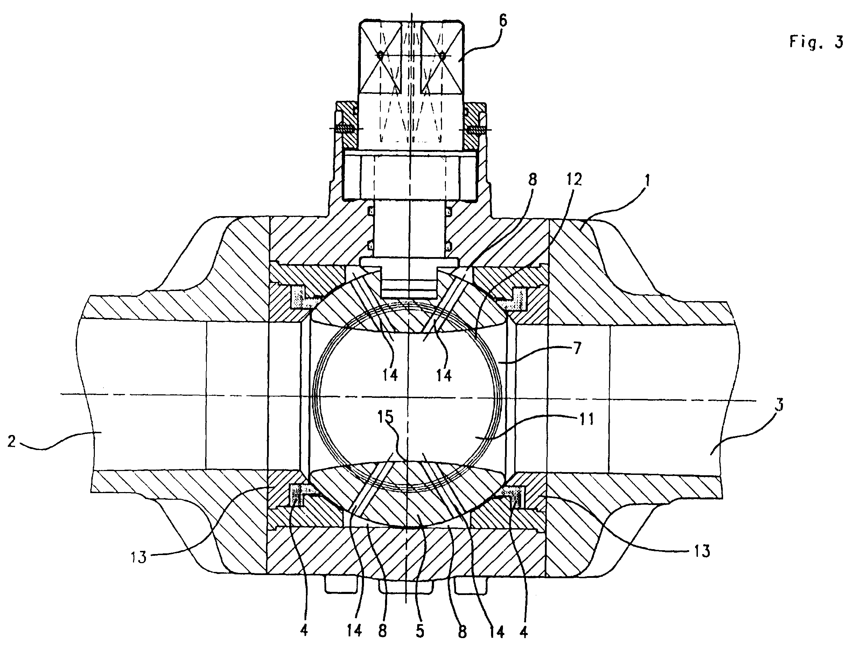

Bei der Ausführungsform nach Figur 3 werden die Spülkanäle von Bohrungen 14 gebildet, die sich, ausgehend von der Durchgangsöffnung 7 der Schaltkugel 5, durch letztere hindurcherstrecken und im Bereich des Gehäuseinnenraums 8 auf der Oberfläche der Schaltkugel 5 münden. Diese Mündungen liegen außerhalb der Abdichtbereiche 11 der Schaltkugel 5.

Wie dargestellt, weist die Durchgangsöffnung 7 eine Querschnittsverengung auf, deren engster Querschnitt 15 im Zentrum der Schaltkugel 5 liegt. Benachbart hierzu stehen die Spülkanal-Bohrungen 14 mit der Durchgangsöffnung 7 in Verbindung. Die Bohrungen 14 sind radial und axial nach außen gerichtet, so daß sie die axialen Randbereiche des Gehäuseinnenraums 8 in den Spülvorgang einbeziehen.

Die Querschnittsverengung der Durchgangsöffnung 7 erzeugt einen düsenartigen Effekt mit entsprechendem Druckunterschied an den einlaßseitigen Bohrungen 14 gegenüber den auslaßseitige Bohrungen 14, wodurch die Intensität der Spülung gesteigert wird.

Im Rahmen der Erfindung sind durchaus Abwandlungsmöglichkeiten gegeben. So können die schräg verlaufenden Nuten 10 nach Figur 1 ausschließlich radial ausgerichtet werden. Auch können die Nuten unabhängig von ihrer Ausrichtung mit einer konischen Querschnittserweiterung der Stützringe 13 kombiniert werden. Anstelle der konischen Querschnittserweiterung nach Figur 2 ist eine beliebig gestaltete Querschnittsdifferenz zwischen den Einlaß- und Auslaßkanälen einerseits und der Durchgangsöffnung der Schaltkugel andererseits denkbar, um die gewünschte Störung der Strömung herbeizuführen. Schließlich können, je nach Konstruktion, die Stützringe oder vergleichbare Elemente einen festen Bestandteil des Gehäuses bilden.

Eine weitere, nicht dargestellte Variante besteht darin, die Spülkanal-Rinnen in der Durchgangsöffnung 7 der Schaltkugel 5 münden zu lassen, und zwar mindestens mit einem Teil ihres Querschnitts. Zusätzlich dazu können die Nuten 10 vorgesehen werden, wobei es dann allerdings nicht mehr unbedingt erforderlich ist, daß die Nuten in der Öffnungsstellung der Schaltkugel exakt mit den Rinnen fluchten. Bei der Ausführungsform nach Figur 3 sei als Variante erwähnt, daß die Spülkanal-Bohrungen 14 auch radial angeordnet sein können, oder aber in andere Richtungen geneigt, als es Figur 3 zeigt. Vor allen Dingen können die Bohrungen zu den Rändern der Schaltkugel hin verschoben sein, so daß sie eine kurzstreckige Umgehung der zugehörigen Dichtringe bilden. Falls gewünscht, kann die Strömung durch Querschnittssprünge des Durchlaßkanals im Mündungsbereich der Bohrungen gestört werden.

## Patentansprüche

1. Kugelhahn mit
- einem Gehäuse (1), das einen Einlaß- und einen Auslaßkanal (2, 3) bildet,
- zwei Dichtringen (4), von denen der eine dem Einlaßkanal (2) und der andere dem Auslaßkanal (3) zugeordnet ist, und
- einer an beiden Dichtringen (4) anliegenden, verdrehbaren Schaltkugel (5) mit einer Durchgangsöffnung (7), die in der Öffnungsstellung der Schaltkugel (5) zusammen mit dem Einlaß- und dem Auslaßkanal (2,3) einen Durchlaßkanal definiert, wobei die Dichtringe (4) in der Schließstellung der Schaltkugel (5) je einen Abdichtbereich (11) auf der Oberfläche der Schaltkugel (5) umgrenzen,
**dadurch gekennzeichnet,**
daß die Schaltkugel (5) mit mindestens einem einlaßseitigen und mindestens einem auslaßseitigen Spülkanal versehen ist, wobei die Spülkanäle, ausgehend vom Durchlaßkanal, zu Bereichen außerhalb mindestens eines der Abdichtbereiche (11) auf der Oberfläche der Schaltkugel (5) führen.

2. Kugelhahn nach Anspruch 1, dadurch gekennzeichnet, daß die Spülkanäle als Rinnen (9) in der Oberfläche der Schaltkugel (5) ausgebildet sind.

3. Kugelhahn nach Anspruch 2, dadurch gekennzeichnet, daß die Spülkanal-Rinnen (9) in der Öffnungsstellung der Schaltkugel (5) mit zugehörigen Nuten (10) fluchten, die an den gehäuseinnenseitigen Enden der Einlaß- und Auslaßkanäle (2, 3) ausgebildet sind.

4. Kugelhahn nach Anspruch 2 oder 3, dadurch gekennzeichnet, daß die Einlaß- und Auslaßkanäle (2, 3) je mindestens an ihrem gehäuseinnenseitigen Ende einen Querschnitt aufweisen, der größer ist als der Querschnitt der Durchgangsöffnung (7) der Schaltkugel (5).

5. Kugelhahn nach einem der Ansprüche 2 bis 4, dadurch gekennzeichnet, daß das gehäuseinnenseitige Ende der Einlaß- und Auslaßkanäle (2, 3) von einem Stützring (13) für den zugehörigen Dichtring (4) gebildet wird.

6. Kugelhahn nach einem der Ansprüche 2 bis 5, dadurch gekennzeichnet daß die Spülkanal-Rinnen mindestens mit einem Teil ihres Querschnitts in der Durchgangsöffnung (7) der Schaltkugel (5) münden.

7. Kugelhahn nach Anspruch 1, dadurch gekennzeichnet, daß die Spülkanäle als Bohrungen (14) ausgebildet sind, die von der Durchgangsöffnung (7) der Schaltkugel (5) zu deren Oberfläche führen.

8. Kugelhahn nach Anspruch 7, dadurch gekennzeichnet, daß die Durchgangsöffnung (7) der Schaltkugel (5) zwischen den einlaß- und auslaßseitigen Spülkanal-Bohrungen (14) eine Querschnittsverengung aufweist.

9. Kugelhahn nach Anspruch 7 oder 8, dadurch gekennzeichnet, daß die Spülkanal-Bohrungen (14), ausgehend von der Durchgangsöffnung (7) der Schaltkugel (5), in Richtung auf den Einlaß- bzw. Auslaßkanal (2bzw.3) geneigt sind.
